(19) Europäisches Patentamt
European Patent Office
Office européen des brevets

(11) **EP 2 557 837 A1**

(12) **EUROPEAN PATENT APPLICATION**
published in accordance with Art. 153(4) EPC

(43) Date of publication:
**13.02.2013 Bulletin 2013/07**

(51) Int Cl.:
***H04W 28/00*** *(2009.01)*

(21) Application number: **10849251.3**

(22) Date of filing: **06.04.2010**

(86) International application number:
**PCT/CN2010/071564**

(87) International publication number:
**WO 2011/124014 (13.10.2011 Gazette 2011/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Alcatel Lucent**
**75007 Paris (FR)**

(72) Inventors:
• **ZHENG, Wu**
**Shanghai 201206 (CN)**
• **ZHAO, Qun**
**Shanghai 201206 (CN)**
• **LIU, Jimin**
**Shanghai 201206 (CN)**
• **LENG, Xiaobing**
**Shanghai 201206 (CN)**
• **SHEN, Gang**
**Shanghai 201206 (CN)**

(74) Representative: **Dreiss**
**Patentanwälte**
**Gerokstrasse 1**
**70188 Stuttgart (DE)**

(54) **METHOD, EQUIPMENT AND NODE FOR DETERMINING AND ADJUSTING AIM PACKET DELAYS OF LINK SUBSECTIONS**

(57) In embodiments of the present invention, there is disclosed a method, apparatus, and network node for determining target packet delays of respective segments of a link. The method may comprise: collecting parameters affecting packet delays; and determining target packet delays of respective segments based on the collected parameters and an overall requirement on the packet delay of the link according to a relation between the packet delays of respective segments and an overall packet delay of the link. Besides, there is further provided a method, apparatus, and network node for adjusting target packet delays of respective segments of a link. With embodiments of the present invention, it is provided a solution of a packet delay guarantee for a multi-hop relay system, and the solution has a great scalability and a good backward compatibility and is transparent to both the core network and user equipments.

Start

Obtain parameters affecting packet delayd — S201

Determine target packet delays of the respective segments according to a relation between the packet delays of the respective segments and an overall packet delay of a link based on the parameters and an overall requirement on the packet delay of the link — S202

Trigger a re-determination of the target packet delays of respective segments in response to that a target packet delay of a segment is unable to be achieved — S203

End

Fig.2

EP 2 557 837 A1

**Description**

TECHNICAL FIELD

The present invention relates to a technical field of relaying, and more specifically, to a method, apparatus, and network node for determining target packet delays of respective segments of a link, and a method, device, and network node for adjusting a target packet delay of a segment of a link.

BACKGROUD

In existing communication systems, operators may provide diversified services to customers, for example, multi-media telephone, mobile TV, online game, and etc. These services have their own characteristics, and different kinds of services have different requirements on performances such as bit rate, packet delay, etc.

These problems can be solved through over-provisioning. However, in a cellular access network, the cost for transmission capacity, especially for radio spectrum and backhaul from a base station, is relatively high; thus, such the over-provisioning technical scheme is usually uneconomical. Therefore, there is a need for a simple and effective standardized QoS mechanism to allow an access operator to enable service differentiation and to control the performance experienced by packet traffic for a certain service.

In the 3rd Generation Partnership Project (3GPP) specification, there is provided a QoS guarantee mechanism of service classes for different QoS class identifiers (QCI). The QCI is a scalar that may be pre-configured by a base station, and the QCI can be used as a reference to set packet forwarding treatment control parameters of a network node, wherein the packet forwarding treatment control parameters may be used for control, such as scheduling weights, admission thresholds, queue management thresholds, link layer protocol configuration, etc. For example, in 3GPP specification, each Service Data Flow (SDF) is associated with one and only one QoS Class Identifier (QCI), and each QCI has a corresponding QoS, for example, priority, packet delay budget (PDB), packet error loss rate (PLER).

In the current 3GPP specification, a single-hop technology directly from a base station to a user equipment (UE) is applied. Thus, in the 3GPP specification, a QoS guarantee for a single hop is designed, for example, the PDB corresponding to QCI#1 is 100ms; therefore, after deducting 20ms average delay between a Policy and Charging Execution Function (PCEF) and a wireless base station, the PDB required by QCI#1 can be satisfied as long as a delay within 80ms can be guaranteed.

A multi-hop relay technology is introduced in the subsequent long-term evolution (LTE)-advanced of the 3GPP (3GPP LTE-A). The multi-hop relay technology is a good solution for coverage extension and throughput enhancement at a relatively low capital expenditure (CapEX) and operation expenditure (OpEX), which has been accepted by LTE-A Rel-10. In accordance with the multi-hop relay technology, the data transmission between the user equipment and the base station has to be forwarded via one or more relay stations.

However, in the prior art, there is no QoS guarantee for a multi-hop relay scenario. Therefore, it is an imminent problem to solve in the art how to guarantee a PDB requirement in a multi-hop relay system.

SUMMARY OF THE INVENTION

In view of the above, in the present invention there is provided a technical solution of determining target packet delays of respective segments of a link so as to provide a QoS guarantee for a multi-hop relay system such as 3GPP LTE-A.

According to one aspect of the present invention, there is provided a method for determining target packet delays of respective segments of a link. The method may comprise: collecting parameters affecting packet delays; and determining the target packet delays of the respective segments based on the collected parameters and an overall requirement on the packet delay of the link according to a relation between the packet delays of the respective segments and an overall packet delay of the link

In one preferable embodiment, the determining the target packet delays of the respective segments may comprise: performing an optimization operation with objectives of the achievability of target packet delays of the respective segments and the maximization of radio resource utilization ratio under constrains of the aforesaid relation, the overall requirement and the parameters, so as to obtain the target packet delays of the respective segments.

In an embodiment of the present invention, the determining the target packet delays of the respective segments is performed at one of network nodes associated with the link. And in this embodiment, the method may further comprise: sending the target packet delays to respective network nodes associated with the link, such that the respective network nodes perform scheduling operations based on the target packet delays.

In another embodiment of the present invention, the determining the target packet delays of the respective segments is performed, based on an identical rule, at respective network nodes associated with the link. In this embodiment, the method may further comprise: obtaining, at the respective network nodes, parameters associated therewith and affecting the packet delays; and sending the obtained parameters affecting the packet delays to other network node associated with the link so as to share the parameters.

In the embodiments of the present invention, the aforementioned parameters are statistical parameters over a period of time, and these parameters may comprise one or more of t network deployment characteristic parameter, traffic characteristic parameter of the user; system parameter configuration characteristic parameter; and distribution characteristic parameter of a user equipment.

In another embodiment of the present invention, the method may further comprise: triggering, in response to that a target packet delay of a segment is unable to meet, a re-determination of the target packet delays of the respective segments.

In a further embodiment of the present invention, the method may further comprise: obtaining packet delay related information of a preceding segment; determining an actual target packet delay of the present segment based on the packet delay related information and the target packet delay of the present segment. In an embodiment of the present invention, the packet delay related information is embedded in a packet transmitted on the preceding segment. According to another embodiment of the present invention, the packet delay related information comprises one or more of an actual packet delay of the preceding segment; an actual packet delay and a target packet delay of the preceding segment; a difference between the actual packet delay and the target packet delay of the preceding segment; and automatic re-transmission request configuration parameters.

According to a second aspect of the present invention, there is provided a method for adjusting a target packet delay of a segment of a link. The method is used for dynamically adjusting or modifying a target packet delay of a segment during a period of performing data transmission, so as to achieve a stricter packet delay guarantee. The method may comprise obtaining packet delay related information of a preceding segment to the segment; determining an actual target packet delay of the segment based on the target packet delay of the segment and the packet delay related information. Further, the method may further comprise: sending packet delay related information regarding the segment to a following network node, for using in determining an actual target packet delay of the following segment.

According to a third aspect of the present invention, there is provided an apparatus for determining target packet delays of respective segments of a link. The apparatus may comprise: a parameter collection module configured to collect parameters affecting packet delays; and a target determination module configured to determine target packet delays of the respective segments on the collected parameters and an overall requirement on the packet delay of the link according to a relation between the packet delays of the respective segments and an overall packet delay of the link based.

According to the fourth aspect of the present invention, there is provided an apparatus for adjusting a target packet delay of a segment of a link. The apparatus may comprise: an information obtainment module configured to obtain packet delay related information of a preceding segment to the segment; an actual target determination module configured to determine an actual target packet delay of the segment based on the target packet delay of the segment and the packet delay related information. Further, the apparatus may further comprise: an information sending module configured to send a packet delay related information regarding the segment to a following network node, for using in determining an actual target packet delay of the following segment.

According to a fifth aspect of the present invention, there is provided a network node comprising the apparatus according to the third aspect of the present invention.

According to a sixth aspect of the present invention, there is provided a network node comprising the apparatus according to the fourth aspect of the present invention.

According to a seventh aspect of the present invention, there is further provided a computer program product having a computer program code embodied thereon which, when loaded in the computer, performs the method according to the first aspect of the present invention.

According to an eighth aspect of the present invention, there is further provided another computer program product having a computer program code embodied thereon which, when loaded in the computer, performs the method according to the second aspect of the present invention.

With the embodiments as provided in the present invention, it can provide a solution of determining and adjusting target packet delays of respective segment of a link for a multi-hop relay system, by which the overall packet delay of the multi-hop relay system may be guaranteed. And in the preferable embodiments of the present invention, during the data transmission process, the target packet delay may be dynamically modified based on the packet delay information on a preceding segment, thereby further improving the performance.

Additionally, the solution of the present invention has a great scalability and can be easily extended to a relay system with any number of hops. Further, the solution as provided in the present invention is intended to optimize the QoS control in a scope of radio access network (RAN) and thus it is transparent to the core network (CN) without any impact thereon. Besides, the solution according to the present invention performs very minor modifications to the current 3GPP LTE-A specification and thus it has a good backward compatibility. Moreover, it is also transparent to LTE Rel-8/9/10 without any impact thereon.

BRIEF DESCRIPTION OF THE DRAWINGS

The above and other features of the present invention will become more apparent through the detailed description of the preferable embodiments with reference to the accompanying drawings. Like reference numbers represent same or similar components throughout the accompanying drawings of the present invention, wherein:

Fig. 1a illustrates a schematic diagram of an exemplary segment configuration of a two-hop relay system according to the present invention;

Figs. 1b and 1c illustrate a schematic diagram of an exemplary dynamic segment adjustment for a two-hop relay system according to the present invention;

Fig. 2 illustrates a flowchart of a method for determining target packet delays of respective segments of a link according to an embodiment of the present invention;

Fig. 3 illustrates a flowchart of a method for adjusting a target packet delay of a segment of a link according to an embodiment of the present invention;

Fig.4 illustrates a schematic diagram of an operation of downlink QoS guarantee for a multi-hop relay system according to an embodiment of the present invention;

Fig.5 illustrates a schematic diagram of an operation of uplink QoS guarantee for a multi-hop relay system according to an embodiment of the present invention;

Fig. 6 illustrates a block diagram of an apparatus for determining target packet delays of respective segments of a link according to an embodiment of the present invention;

Fig. 7 illustrates a block diagram of an apparatus for determining target packet delays of respective segments of a link according to another embodiment of the present invention; and

Fig. 8 illustrates a block diagram of an apparatus for adjusting a target packet delay of a segment of link according to an embodiment of the present invention.

DETAILED DESCRIPTION OF EMBODIMENTS

Hereinafter, detailed description will be made to methods, apparatuses and network node for determining and adjusting target packet delays of respective segments according to embodiments of the present invention with reference to the accompanying drawings.

As previously mentioned, the prior art, there is no technical solution for guaranteeing PDB of a multi-hop system. Thus, in order to satisfy the PDB requirement of the whole eNB-RN-UE link, a new mechanism should be designed to provide PDB guarantee.

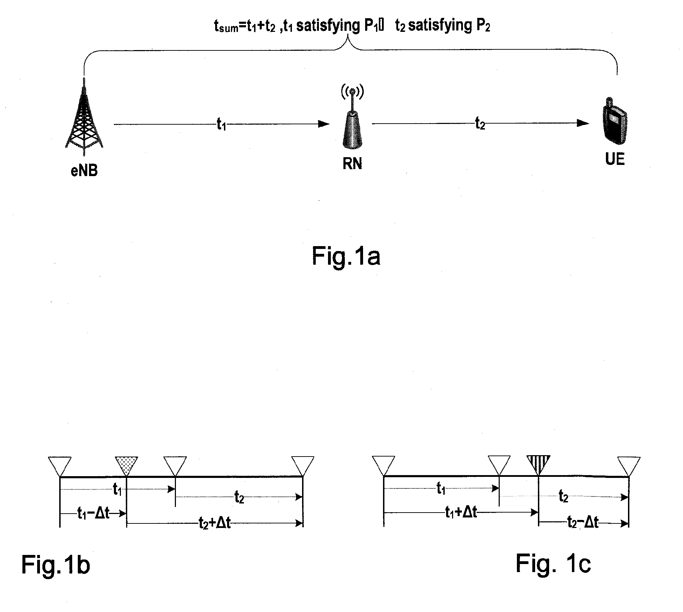

First, reference will be made to Figs. 1a - 1c to exemplarily describe the basic principle upon which the embodiments of the present invention are based. As illustrated in Fig. 1a, a two-hop relay system is illustrated, which comprises a backhaul link eNB-RN and an access link RN-UE. Based on the characteristics of relay, the backhaul link and the access link may be regarded as two links connected in series. Thus, based on the nature of the PDB index, it may be determined that the overall packet delay $t_{sum}$ of the whole link and the packet delays t1 and t2 of the backhaul link and the access link satisfy the following relation:

$$t_{sum} = t_1 + t_2 \qquad \qquad \text{Equation 1}$$

Besides, parameters associated with respective segments and affecting the PDBs of the respective segments may also be collected before service initialization, wherein the parameters affecting the backhaul link packet delay are generally represented by P1, and the parameters affecting the access link packet delay are generally represented by P2.

After determining the relation, the target packet delay of each segment of the link (i.e., the PDB of each segment), may be determined based on the relation, parameters P1 and P2 and the overall requirements on the PDB of the link. Then, coordination may be performed between the eNB and the RN based on the PDBs determined for the respective segments, so as to achieve their PDBs on each segment of the link, thereby guaranteeing an end-to-end QoS requirement.

Further, the present invention may further consider dynamically adjusting the target packet delay during an actual transmission. For example, the packet delay condition of a preceding segment can be considered, an actual PDB may be determined for the present segment based on the condition of the preceding segment, so as to provide further improvement for PDB guarantee.

Fig. 1b and 1c illustrate a schematic diagram of an exemplary dynamic segment adjustment for a two-hop relay system according to an embodiment of the present invention. According to Fig. 1b and Fig. 1c, a difference Δt between the actual packet delay and the target packet delay of the preceding segment may be obtained; based on this difference, the actual target packet delay of a following segment may be determined.

As illustrated in Fig. 1b, it illustrates a scenario in which a data packet is received in advance by Δt with respect to a predetermined PDB. In this scenario, the PDB as saved in the preceding segment may be allocated to a following segment, i.e., increasing the target packet delay (i.e., packet delay budget) of the segment by Δt, i.e., t2'=t2+Δt. In contrast, Fig. 1c illustrates a scenario in which the reception of a data packet is delayed by Δt with respect to the predetermined PDB; thus, in this scenario, the packet delay of the subsequent segment may be reduced by Δt, i.e., t2'=t2-Δt.

A scenario of more than two hops is similar to the scenario of two hops; thus, based on the above depiction, it may be easily extended to the scenario of more than two hops. For example, for a relay scenario of more than two hops, the function of its relation may be expressed below:

$$t_{sum} = \sum_{i=1}^{n} t_i \text{ , } t_i \text{ satisfying } P_i \qquad\qquad \text{Equation 2}$$

wherein $t_{sum}$ denotes the overall requirement on the PDB of the link; $t_i$ denotes the packet delay of the ith segment, respectively; n denotes the number of segments of the overall link or the number of hops of the relay system; and Pi denotes a parameter affecting the ith segment.

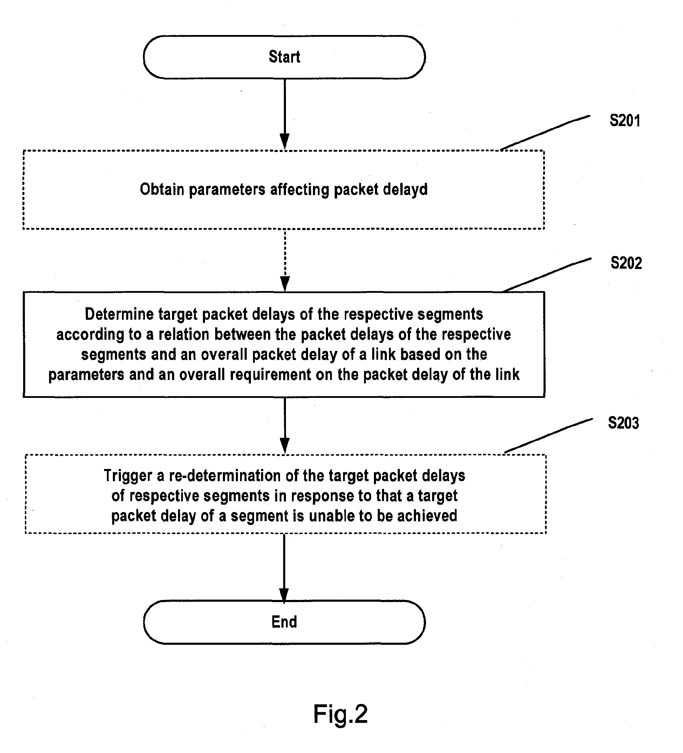

Based on the above basic principle, embodiments of the present invention provide a technical solution of determining and adjusting target packet delays of the respective segments of a link. Next, Fig. 2 will be referenced to describe a solution of determining target packet delays of respective segments of a link according to the present invention. Here, Fig. 2 illustrates a flowchart of a method for determining target packet delays of respective segments of a link according to an embodiment of the present invention.

As illustrated in Fig. 2, first in step S201, parameters affecting packet delays are collected. These parameters may be parameters associated with the respective segments and restricting their respective packet delays, for example, the parameters may be network deployment characteristic parameters, traffic characteristic parameters of a user, system parameter configuration characteristic parameters, and distribution characteristic parameters of a user equipment, etc.

The network deployment characteristic parameter may comprise error rates of the respective segments, for example, bit error rates, code error rates, symbol error rates, packet error rates, packet error loss rates, or interference conditions of the respective segments. A larger error rate will cause more data retransmission, and the required PDB is larger; besides, a larger interference will cause a larger error rate, thereby causing a requirement on a larger PDB.

The traffic characteristic parameter of the user may be average throughput of each segment, a radio resource utilization rate, etc. A higher throughput of each segment of a link or a higher radio resource utilization may mean that a larger PDB is required; whereas, lower throughput of each segment or a smaller radio resource utilization rate might mean a smaller PDB.

The system parameter configuration characteristic parameter may be a number of subframes for transmission allocated to the respective segments. The configuration of subframes for each link will affect the HARQ acknowledge and negative acknowledge feedback, which has a certain influence on the time required for retransmission. For example, the less the subframes allocated to the backhaul link are , the more does the time interval for data retransmission caused by error transmission increase, and the larger is the PDB required by the backhaul link; whereas, the more the subframes allocated to the backhaul link are, the smaller is the PDB required by the backhaul link.

Additionally, the distribution characteristic parameters of the user equipment may be the distribution condition of the user equipment. The distribution condition of the user equipment means how many user equipments and how much data amount are directly served by the base station, and how many user equipments and how much data amount are served by a relay station under indirect support of the base station. The more user equipments served by a relay station are, the larger is the data amount, and the greater is the PDB required by the backhaul link; thus, in order to guarantee PDB, it is required to delicately design the PDBs of the access link and the backhaul link.

Next, in step S202, according to the relation between the packet delays of the respective segments and the overall packet delay of the link, the target packet delays of the respective segments are determined based on the collected parameters and the overall requirement on the packet delay of the link.

According to one preferable embodiment of the present invention, optimization operation may be performed with objectives of achievability of the target packet delays of the respective segments and the maximization of the radio resource utilization under constrains of the abovementioned relation, the overall requirement and the collected parameters, thereby obtain the most suitable target packet delays of the respective segments. The specific optimization operation may be designed with respect to the conditions of the system. Those skilled in the art can completely implement this optimization operation based on the teaching provided herein and the technical knowledge he has grasped. Thus, in order to make the present invention much clearer, the optimization operation here will not be detailed.

In this way, in determining the target values of the respective segments, actual conditions of the respective segments may be considered to set an achievable target packet delay therefor. This manner of determining the target packet delays has a higher efficiency.

The above parameters affecting the packet delay budgets are preferably statistical values over a long period of time, i.e., an average value over a certain period of time. This means performing a semi-static configuration process for the respective segments of a link, i.e., not dynamically performing configuration with change of the above parameters or not constantly maintaining this configuration after configuration is completed based on the above parameters (which will be further described in detail hereinafter).

According to an embodiment of the present invention, the above process of determining may be performed at one of respective network nodes associated with the link, for example, at eNB, or implemented in a centralized manner at any relay node. Thus, after the target packet delays of the respective segments are determined, the target packet delays may be further sent to the respective network node associated with the link, such that the respective network nodes perform suitable scheduling operations based on the target packet delays.

Besides, according to another embodiment of the present invention, the above operation of determining the target packet delays may be performed at the respective network nodes associated with the link respectively. In this case, the consistency between the target packet delays as determined by the respective network nodes has to be guaranteed, and the respective network nodes have to perform the operation of determining the target packet delays based on a same rule. Besides, it is also required to share parameters among the respective network nodes. To this end, according to this embodiment, parameters associated with the respective network nodes and affecting their packet delay budgets may be obtained at the respective network nodes; the parameters are parameters as described above, which may be obtained through measurement and/or computation. Afterwards, the obtained parameters affecting the packet delays may be sent to other network nodes associated with the link so as to share these parameters. In this way, the respective network nodes may determine same target packet delays for the respective segments based on the same rule and same parameters. Thus, each network node is only required to perform a link adaptation and scheduling operation based on its own target packet delay, without sending the determined other target packet delays to other network nodes.

The centralized implementation differs from the distributed implementation in that the centralized implementation has a characteristic of collectively collecting parameters and collectively determining the target packet delays, while the determined target values may be sent to other network nodes for sharing; whereas the distributed implementation has a characteristic of parameter sharing and performing the determining process based on the same rule. In particular, based on the collective implementation, the network node responsible for collectively determining the target values collects the parameters from other network nodes; while, based on the distributed implementation, each network node sends its own obtained parameters to other network nodes, such that all relevant network nodes can obtain the parameters required by performing the determining

After each network node obtains its own target packet delay, a suitable scheduling operation is performed based on the target packet delay so as to achieve the target packet delay through performing a suitable scheduling in time domain, space domain, and frequency domain. For example, it can adopt, according to the target packet delay, suitable scheduling and coding, power allocation/ control, HARQ mechanism, ARQ mechanism, frequency selectivity scheduling, and spatial diversity technology, etc to achieve the target packet delay. It is a known technology to perform link adaptation and scheduling operation to achieve the target packet delay, which will not be detailed herein.

The above operation of determining the target packet delays for the respective segments may also be called a process of configuring a packet delay for the segments.

Further, the present inventors also note the following scenario: in an actual application, conditions such as the link condition, the system parameter configuration, and the network deployment are all dynamically variable. The initially determined target packet delays might not adapt to a new situation after a period of time, and some network nodes possibly could not achieve the target packet delays as designated thereto regardless of how to perform link adaptation and scheduling operation.

Based on the above scenario, these inventors provide a reconfiguration mechanism. According to a preferable embodiment of the present invention, in step S203 as illustrated in the dotted-line block (indicating an alternative step), further in response to that a target packet delay of a segment is unable to be achieved, a re-determination of the target packet delays for the respective segments of the link is triggered.

According to a preferable embodiment of the present invention, at the respective network nodes, actual packet delays of relevant segments are measured; if it is found that a target packet delay cannot be satisfied within a period of time, a message may be sent to a network node for determining the target packet delays of the respective segments to request for a re-configuration. The network node, after receiving the re-configuration request, may re-collect the required parameters and re-determine suitable target packet delays for the respective segments. Besides, the respective network nodes may also periodically send the parameters affecting the packet delays to a network node determining the target packet delays for the respective segments such that the network node determines whether to re-perform the configuration. When the network node determines that it is required to perform re-configuration based on the parameters sent from other network nodes, the target packet delays of the respective segments may be re-determined based on these received parameters.

Thus, the technical solution as provided by this preferable embodiment is a process of performing semi-static configuration for the respective segments of the link. Different from the dynamic configuration manner of dynamically performing the configuration with variation of the above parameters and the static configuration manner of constantly maintaining the configuration after the configuration is completed, this process is a technical solution of performing re-configuration based on observation over a period of time. Thus, this configuration manner may reduce various overheads required by the dynamic configuration and meanwhile can overcome the defect of the static configuration that cannot adapt itself to situation variation.

Besides, the above configuration mechanism and re-configuration mechanism that determine the target packet delays of the respective segments, the present invention further provides a method of dynamically adjusting or modifying the target delay budgets during the data transmission process. During the data transmission process, each network node may perform adjustment or modification to the target packet delay of a following segment based on the packet delay related information of a preceding segment.

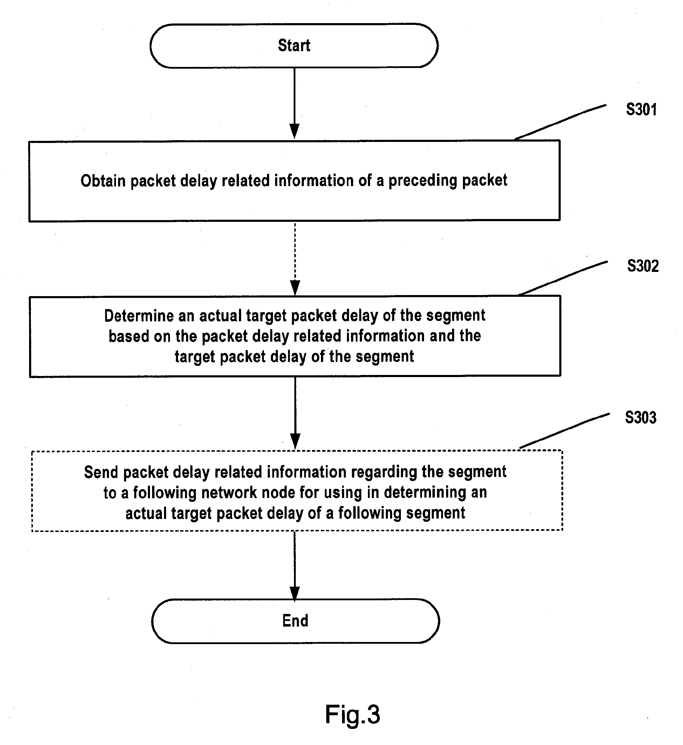

Hereinafter, reference will be made to Fig. 3 to describe in detail a solution of performing dynamic adjustment to a target packet delay according to the present invention, wherein Fig. 3 illustrates a flowchart of a method of dynamically adjusting a target packet delay according to an embodiment of the present invention.

As illustrated in Fig. 3, in step S310, packet delay related information of the preceding segment is obtained. The packet delay related information may be information on the actual packet delay of the preceding segment, for example, the difference t between the above-mentioned actual packet delay and its target packet delay, or the actual packet delay and the target packet delay of the preceding segment; or in the case that each network node also knows the target packet delays of other network nodes, it may be the actual packet delay. For example, the packet delay related information may involve: the duration of the data packet in a queue of the network node starting from reception of the data packet; the difference between the time interval before and after each network node schedules for correctly received data packet and a promissory target packet delay, etc. The packet delay related information may be included in the data packet as transmitted on the preceding segment. For example, it may be placed in the fist byte of payload (radio link control layer protocol data unit, RLC-PDU) as transmitted over the preceding segment. However, for the uplink access link, the UE is actually not required to perform the operation of sending the packet delay related information, because RN may obtain the packet delay related information through computation based on the information it knows. For example, RN may determine the packet delay related information of the uplink access link based on the time when the user equipment requests for resource allocation and the time when it receives an actual data packet.

Besides, the packet delay related information may also be further associated with the automatic re-transmission request configuration parameters, for example radio parameters of HARQ or ARQ configuration. When an error occurs on the first hop of the link, automatic re-transmission will be generally performed; thus for the second-hop scheduling, it is required to reduce some PDB based on the automatic re-transmission configuration parameters, i.e., reducing the target packet delay. For example, for HARQ operation, HARQ timeline may be considered defined by multiplexing pattern, TDD frame configuration, and relay frame configuration, etc., thereby determining a suitable PDB. For ARQ retransmission, if a radio link control layer acknowledgement mode (RLC-AM) is activated, it is required to re-set the packet delay related information before re-transmission and placing it in the re-transmitted data packet.

Next, in step S302, the actual target packet delay of the segment may be determined based on the target packet delay of the segment and the packet delay related information.

In this way, the target packet delay may be modified based on the packet delay related information of the preceding segment. For example, as illustrated in Fig. 1b and 1c, the packet delay budget is increased by t, i.e., t2'=t2+ t; or otherwise, the packet delay budget of the following segment is reduced by t, i.e., t2'=t2- t.

Besides, when the actual target packet delay of the present segment is reduced with respect to a predefined target packet delay, emergent scheduling may be performed. For example, scheduling priority may be raised based on the overall situation, for example, placing the corresponding data packet to a relatively front position of the queue which complies with the first-in first-out principle, instead of directly placing it at the tail of the queue. Therefore, it can guarantee that the target value may be still achieved even in the case of reduction of the packet delay budget of the present segment.

It should be noted that for different services, their corresponding QCI classes are different; thus, the overall requirement of the packet delay of the link is also different. Therefore, the target packet delays of the respective segments should be determined for different services.

Further, it should be noted that for uplink and downlink, even if for the same packet delay requirement, the target packet delays of the respective segments might also be different, because the parameters affecting the uplink packet delay and the parameters affecting the downlink packet delay might be different. Thus, the operation of determining the target packet delays of the respective segments should be performed for the uplink and downlink, respectively.

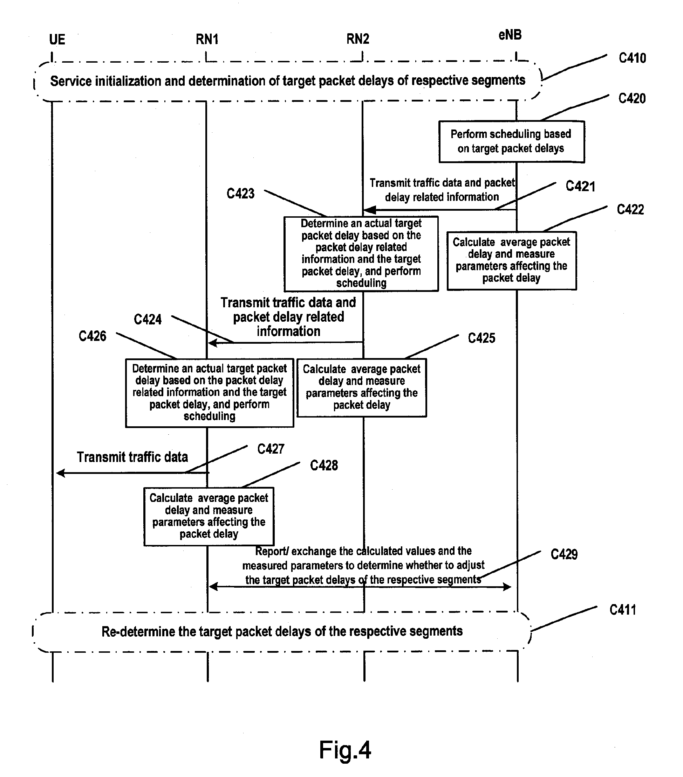

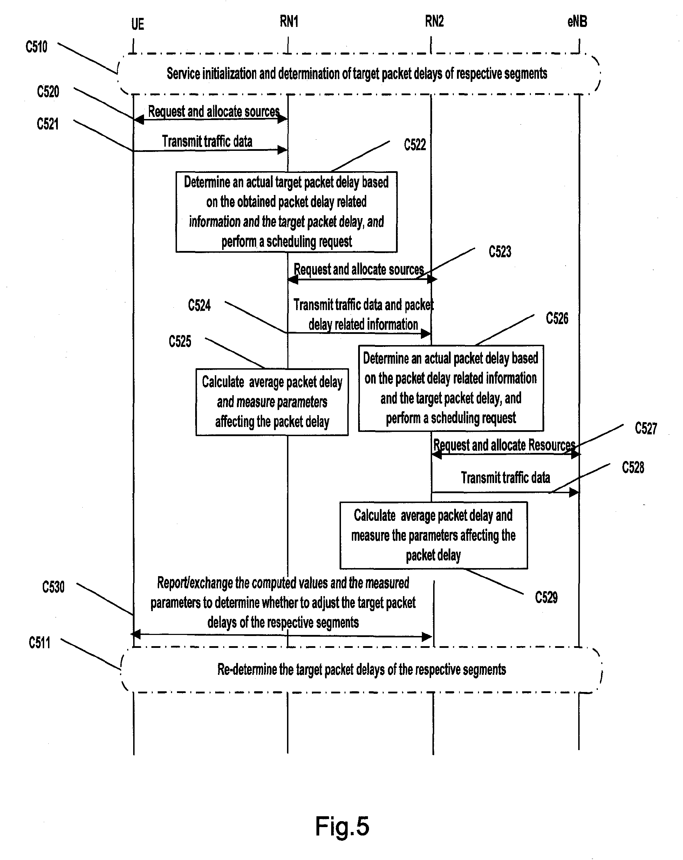

Next, specific implementation for guaranteeing QoS according to the present invention will be elaborated with reference to Fig. 4 and Fig. 5. Figs.4 and 5 illustrate schematic diagrams of operations of downlink and uplink QoS guarantees for a three-hop relay system according to an embodiment of the present invention, respectively.

As illustrated in Figs. 4 and 5, the PDB of the whole link is guaranteed through an outer-loop control and an inner-loop control so as to satisfy QoS requirements. The outer-loop control, as is illustrated with a single-dotted line in Figs. 4 and 5, is mainly responsible for performing service initialization and determining the target packet delays of the respective segments of the link based on the aforementioned method of the present invention (C410 and C510), and performing re-configuration to the target packet delay of each segment of the link in response to the very long-term measurement and report from a relevant network node (for example, base station eNB or relay node RN), i.e., re-determining the target packet delays (C411 and C511). The inner-loop control (C420-C429, and C520-C310), as is illustrated in solid line in Figs. 4 and 5, is responsible for performing some link adaptation and a proper scheduling, for example, adaptive modulation and coding, power distribution/ control, HARQ, ARQ, frequency selectivity scheduling, and spatial diversity technology, etc., to achieve the target packet delay, thereby guaranteeing the overall PDB of the whole link. Besides, in the inner-loop control, there is further provided a solution of dynamically adjusting the target packet delay, for example, the target packet delay may be adjusted based on the packet delay related information of the preceding segment.

From Figs. 4 and 5, it can be seen that the uplink inner control and the downlink inner control have some differences due to different natures of the downlink data sender (i.e., eNB) and the uplink data sender (user equipment).

First, the downlink scenario will be described with reference to Fig. 4. As illustrated in Fig. 4, first at C410, service initialization is performed, and downlink target packet delays (i.e., PDBs) of the respective segments (access link and backhaul link) are determined based on the overall requirement on the eNB-RN2-RN1-UE packet delay in accordance with the aforementioned method as described with reference to Fig. 2.

Next, at C420, the eNB performs a proper scheduling operation based on the target packet delay of the downlink between the eNB and the RN2, and performs traffic data transmission at C421. Moreover, at C421, the packet delay information related to the segment may also be included in a data packet to send to the RN2. The packet delay related information may be the information as described above, which may be included in a payload (RLC SDU), for example, a first byte of the payload (RLC SDU) may be used to indicate the packet delay related information. Besides, the eNB may calculate an average packet delay and measure the parameters affecting the packet delays at C422; these parameters are used to re-configuration which might be performed in the future.

After receiving the traffic data, RN2 may obtain, at C423, the packet delay related information in the data packet, determine an actual target packet delay based on the packet delay related information and its target packet delay in accordance with the method as above described with reference to Fig. 3, and perform scheduling based on the determined actual target packet delay. Next, similar to step C421, the RN2 sends the traffic data and packet delay related information together to RN1 at C424. Moreover, the RN2 calculates an average packet delay and measures parameters affecting the packet delays at C425.

Similar to step C423, the RN1 determines an actual target packet delay of the downlink access link based on the packet delay related information in the received data packet and its target packet delay in step C426, and performs scheduling. Afterwards, traffic data is transmitted at C427 and the traffic data is sent to the user equipment UE. Because it is an access link to the user equipment and there is no any other link which needs dynamically adjusting the target packet delay, it would be unnecessary to transmit the packet delay related parameters. Similarly, the RN1 calculates the average packet delay and measures parameters affecting the packet delays in step C428.

After completing a downlink data transmission or in any other proper time, the measured parameters and calculated average packet delay may be reported or exchanged among the RN1, the RN2 and the eNB in an event-triggered manner or by periodically reporting, so as to determine whether a re-configuration is needed.

Under a condition that it is determined to require the re-configuration, the packet delay budgets for the respective segments may be re-determined based on new parameters in step C411.

The downlink QoS guarantee manner has been described above in combination with a three-hop relay system. Based on the above disclosure, those skilled in the art would easily extend the present invention to a relay system with any number of hops. For example, for a two-hop relay system, RN2 and all of its operations in Fig. 4 may be omitted, and the eNB directly sends traffic data and packet delay related information to the RN1; other operations are completely similar to the illustrated three-hop scenario. Besides, for a more-than-three-hop relay system, the operations performed by all intermediate relay nodes between the eNB and the RN1 are completely similar to the operations of the intermediate relay node RN2 as illustrated in Fig. 4.

Next, Fig. 5 will be referenced to describe the uplink QoS guarantee. As illustrated in Fig. 5, first, service initialization is performed at C510 to determine the uplink target packet delays of the respective segments. The process of determining the uplink target packet delays is completely similar to that of the downlink target packet delay, just except that they are performed based on different parameters.

When a UE is to send traffic data, first, a resource request and allocation process (C520) is performed between the UE ad RN1 so as to obtain the radio resource and the like required for transmitting traffic data. The UE for example sends a buffer state report (BSR) to RN1 with a granularity of a logic channel set so as to request radio resources for traffic transmission. If the UE has not obtained the uplink resources for BSR yet, a scheduling request may be triggered before sending the BSR to request the RN1 to allocate it resources for the BSR. The RN1 performs scheduling after receiving the BSR so as to allocate the UE uplink access link resources for transmitting traffic data, thereby satisfying the target packet delay of the uplink access link, and indicate to the UE information regarding modulation coding mechanism and allocation of radio resources within a predefined time. The information indicated to the UE may not involve a logic channel; but the UE determines which logic channel is used for transmission.

Next, the UE selects a proper logic channel to perform transmission of traffic data according to the indication from the RN1. After the traffic data arrives at the RN1, the RN1 may obtain the packet delay related information of the uplink access link. Here, different from the downlink, the packet delay related information is not transmitted by the preceding network node; on the contrary, the RN derives it based on the time when the UE sends the BSR and the time when it receives the traffic data correctly. In other words, it can determine through calculation how many PDBs are actually used by the uplink access link and the different amount between the actual packet delay and the predefined target packet delay. Based on the difference amount and the target packet delay of the uplink between the RN1 and the RN2, the actual target packet delay available for the uplink between the RN1 and the RN2 may be determined. Then, the RN1 performs a scheduling request based on the actual target packet delay (C522), so as to guarantee the adjusted target packet delay. Similarly, a resource request and allocation process is performed between the RN1 and the RN2 (C523). This process is similar to the resource request and allocation process between the UE and the RN1, which will not be elaborated herein. Afterwards, a traffic transmission is performed at C524, and similar to the downlink transmission, packet delay related information regarding to the uplink between the RN1 and the RN2 is included in the packet to transmit to the RN2. The packet delay related information may is similar to the packet delay related information as transmitted in downlink and may for example be included in a payload (RLC SDU); a first byte of the payload (RLC SDU) may be used to indicate the packet delay related information. Besides, the RN1 may calculate an average packet delay and measure the parameters affecting the packet delays at C525; these parameters are used to a PDB re-configuration which might be performed in the future.

When receiving the traffic data and the packet delay related information transmitted from RN1, the RN2 may determine an actual target packet delay based on the packet delay related information included in the traffic data and the target packet delay of the uplink between the RN2 and the eNB, and perform the scheduling request based on the actual target packet delay. Next, a resource request and allocation process (C527) similar to C520 and C523 is performed between the RN2 and the eNB. Subsequently, a traffic data transmission is performed at C528. Because it is the last hop, it would be unnecessary to send the packet delay related information to the network node eNB. Besides, the average packet delay may be calculated and the parameters affecting the packet delays may be measured in step C529.

Next, similar to downlink C429 and C411, at C530 an C511, a parameter information exchange or report operation may be performed and in response to the need of performing a re-configuration, the target packet delays of the respective segments is re-determined.

It should be noted that the above BSR may adopt a multi-level mechanism for indicating different degrees of schedule emergency, for example, three levels, i.e., 30ms level, 60ms level, and 90ms level. Different BSR levels may be designated to different services. The upper-level network node (for example eNB and RNs) may allocate proper radio resources to lower-level network nodes (RN) or user equipment (UE) based on the BSR level, thereby realizing a more effective uplink scheduling.

The scheme of uplink QoS guarantee has been described above in combination with a three-hop relay system. For a two-hop relay system, for example, those skilled in the art would appreciate that all operations of the RN2 may be omitted, and the RN1 directly sends the traffic data to the eNB, without considering the packet delay related information; other operations are completely similar the illustrated scenario of three hops. Further, for a scenario of more than three hops, the operations performed by all relay nodes between the eNB and the RN1 are similar to RN2, except that when a following network node is not the eNB, it is required to send the packet delay related information. Therefore, based on the above disclosure, those skilled in the art would easily extend the present invention to a relay system with any number of hops.

It should be noted that the technical solution of dynamically adjusting a target packet delay of a segment based on the packet delay related information needs to occupy certain transmission resources, thus it may be performed for services which have a strict requirement on the packet delay.

Besides, Figs. 4 and 5 exemplarily illustrate that the operations of reporting/exchanging the calculated average packet delays and the measured parameters are performed after a transmission is finished; however, the present invention is not limited thereto. Instead, the time interval of the reporting/exchanging operation may be determined based on the actual condition. Preferably, based on a very long period of time, it may significantly reduce overheads and may adapt itself to condition changes.

The technical solution of the present invention provides a technology of determining and adjusting packet delay budgets for respective segments of a link, thereby providing a technical solution of packet delay guarantee for a multi-hop relay system. According to the present invention, proper target packet delays are determined for the respective segments through an outer-loop control which may be further adjusted through a semi-static configuration. Besides, for a service has a strict requirement on the packet delay budget, performance may be further improved through dynamically adjusting the target packet delay with an inner-loop control, thereby providing a more sufficient PDB guarantee.

Additionally, the technical solution of the present invention has a great scalability and may be easily extended to support a relay system with any number of hops. Moreover, the technical solution as provided in the present invention aims to optimizing the QoS control within the scope of radio access network (RAN), which is transparent to the core network (CN) and will not cause any impact on the CN. Besides, the technical solution performs very few modifications to the current 3GPP LTE-A and thus has a good backward compatibility; besides, it is also transparent to the LTE Rel-8/9/10 user equipments and will not, cause any impact thereto.

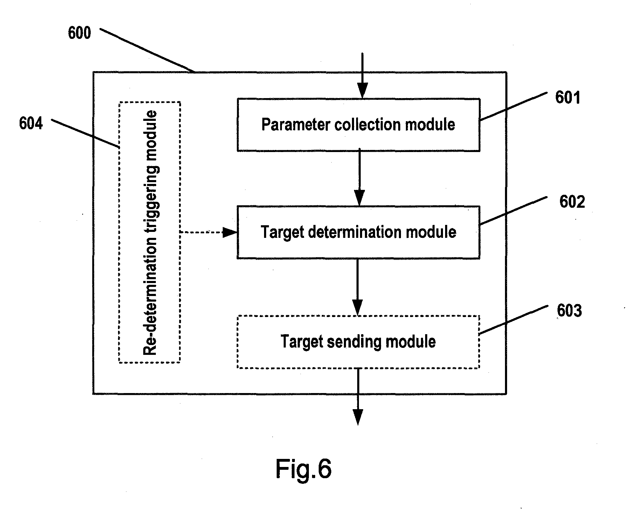

Besides, the present invention also provides an apparatus for determining target packet delays of respective segments of a link. Hereinafter, description will be made with reference to Figs. 6-8.

First, reference is made to Fig. 6, which illustrates a block diagram of an apparatus 600 for determining target packet delays of respective segments of a link according to an embodiment of the present invention. The apparatus 600 may comprise: a parameter collection module 601 configured to collect parameters affecting packet delays; and a target determination module 602 configured to determine the target packet delays of the respective segments according to a relation between the packet delays of the respective segments and an overall packet delay of the link based on the collected parameters and an overall requirement on the link.

According to a preferable embodiment of the present invention, the target determination module 602 may be configured to perform an optimization operation with objectives of achievability of the target packet delays of respective segments and the maximization of the radio resource utilization under constrains of the abovementioned relation, the overall requirement and the collected parameters, thereby obtain the target packet delays of the respective segments.

According to another embodiment of the present invention, the target determination module 602 may be configured to determine the target packet delays of the respective segments of the link for uplink and downlink.

According to a further embodiment of the present invention, the target determination module 602 may be configured to determine the target packet delay of the respective segments of the link at one of network nodes associated with the link. In this embodiment, the apparatus 600 may further comprise a target sending module 603 (illustrated in a dotted-line block, representing an optional module) configured to send determined target packet delays to respective network nodes associated with the link, such that the respective network node perform link adaptation and scheduling operations based on the target packet delays.

In another embodiment of the present invention, the apparatus 600 may further comprise: a re-determination triggering module 604 (illustrated in a dotted-line block, representing an optional module) configured to trigger the target determination module 601 to re-determine the target packet delays of the respective segments in response to that a target packet delay of a segment is unable to be achieved.

In the embodiments of the present invention, the collected parameters are statistical parameters over a period of time; these parameters may comprise one or more of network deployment characteristic parameter; traffic characteristic parameter of a user; system parameter configuration characteristic parameter; and distributed characteristic parameter of a user equipment.

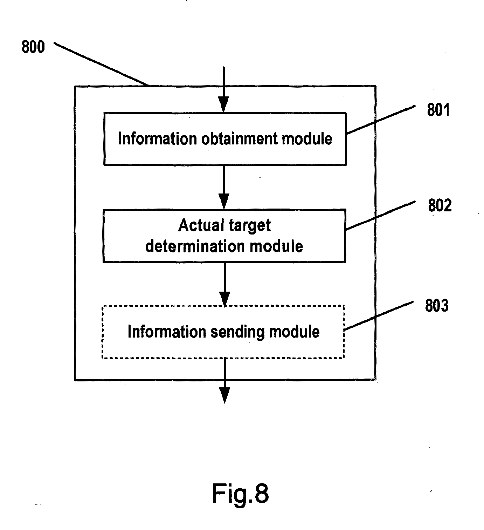

Further, the apparatus 600 according to the present invention may further comprise an apparatus for adjusting a target packet delay budget of a segment of a link. This device will be described in details hereinafter with reference to Fig. 8.

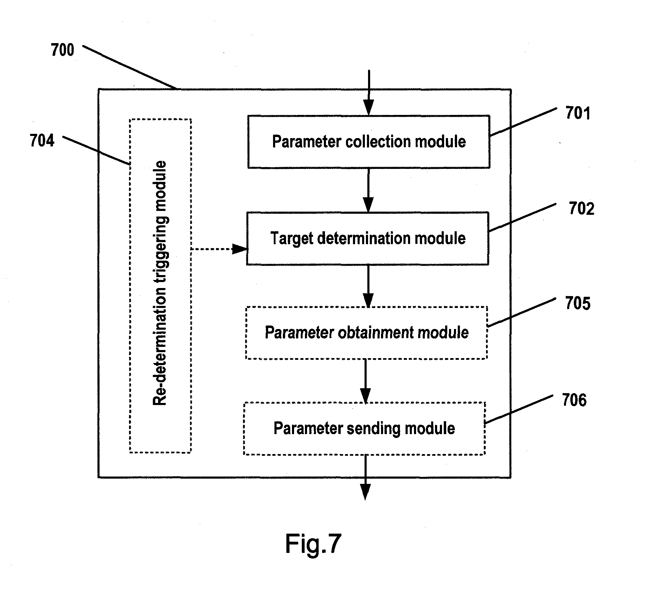

Besides, Fig. 7 illustrates an apparatus for determining target packet delays of respective segments of a link according to another embodiment of the present invention. As illustrated in Fig. 7, the apparatus 700 may comprise a parameter collection module 701, a target determination module 702, and an optional re-determination triggering module 704, which correspond to the parameter collection module 601, a target determination module 602, and an optimal re-determination triggering module 604, respectively. For these modules and relevant embodiments in Fig. 7 which are similar to those in Fig. 6, please refer to the description with reference to Fig. 6, which, for the sake of clarity, will not be further elaborated herein.

What is different from Fig. 6 is that the target determination module 701 as illustrated in Fig. 7 may be configured to determine the target packet delays of the respective segments at respective network nodes related to the link based on a same rule. In this embodiment, the apparatus may further comprise: a parameter obtainment module 705 configured to obtain at respective network nodes their own relevant parameters affecting the packet delays; and a parameter sending module 706 configured to send the obtained parameters affecting the packet delays to other network node associated with the link so as to share the parameters.

Besides, Fig. 8 illustrates an apparatus for adjusting a target packet delay of a segment of a link according to the present invention. As illustrated in Fig. 8, the apparatus 800 may comprise an information obtainment module 801 configured to obtain packet delay related information of a preceding segment; an actual target determination module 802 configured to determine an actual target packet delay of a present segment based on the packet delay related information and a predefined target packet delay of the present segment. In an embodiment of the present invention, the apparatus 800 may further comprise: an information sending module 803 configured to send the packet delay related information of the present segment to a following network node for using in determining an actual target packet delay of the following segment. The packet delay related information may be embedded in the packet as transmitted on the preceding segment. In another embodiment according to the present invention, the packet delay related information includes one or more of: the actual packet delay of the preceding segment; the actual packet delay and the target packet delay of the preceding segment; the difference between the actual packet delay and the target packet delay of the preceding segment; and the automatic re-transmission request configuration parameters.

Besides, the present invention may further provide a network node comprising an apparatus in any embodiment as described in Figs. 6-8. The network node may be a relay node or a base station.

Additionally, the present invention may also be implemented through a computer program. To this end, the present invention further provides a computer program product with a computer program code embodied thereon, which performs, when loaded to a computer, the method for determining target packet delays of respective segments of a link according to the present invention. Additionally, there is further provided a computer program product with a computer program code embodied thereon, which performs, when loaded to a computer, the method for adjusting a target packet delay of a segment of a link according to the present invention.

For detailed operations of various modules in various embodiments as described with reference to Figs. 6 -8, please refer to the above depictions on the method for determining target packet delays of respective segments of a link and the method for adjusting a target packet delay of a segment of a link according to the embodiments of the present invention with reference to Figs. 1 - 5.

The present invention has been described above mainly with reference to a 3GPP system. However, those skilled in the art would appreciate that the present invention may also be applied to other communication network in a similar situation.

It should be further noted that embodiments of the present invention may be implemented by software, hardware, or a combination of software and hardware. The hardware portion may be implemented by a dedicated logic; the software portion may be stored in a memory and executed by a proper instruction execution system, for example, a microprocessor or dedicated design hardware.

Although the present invention has been described with reference to the embodiments as currently considered, it should be understood that the present invention is not limited to the disclosed embodiments. On the contrary, the present invention intends to cover various modifications and equivalent arrangements within the spirit and scope of the appended claims. The scope of the appended claims is accorded with the broadest interpretation so as to cover all such modifications and equivalent structures and functions.

**Claims**

1.  A method for determining target packet delays of respective segments of a link, comprising:

    collecting parameters affecting packet delays; and
    determining target packet delays of the respective segments based on the parameters and an overall requirement on the packet delay of the link according to a relation between the packet delays of the respective segments and an overall packet delay of the link.

2.  The method according to claim 1, wherein the determining target packet delays of the respective segments comprises:

    performing an optimization operation with objectives of achievability of the target packet delays of the respective segments and maximization of radio resource utilization ratio under constrains of the relation, the overall requirement and the parameters, so as to obtain the target packet delays of the respective segments.

3.  The method according to claim 1, wherein the determining target packet delays of the respective segments is performed at one of network nodes associated with the link, and the method further comprises:

    sending the target packet delays to the respective network nodes associated with the link, such that the respective network nodes perform scheduling operations based on the target packet delays.

4.  The method according to claim 1, wherein the determining target packet delays of the respective segments is performed, based on an identical rule, at respective network nodes associated with the link.

5.  The method according to claim 4, further comprising:

obtaining, at the respective network nodes, parameters associated therewith and affecting the packet delays; and sending the obtained parameters affecting the packet delays to other network nodes associated with the link so as to share the parameters.

6. The method according to claim 1, further comprising:

triggering, in response to that a target packet delay of a segment is unable to be achieved, a re-determination of the target packet delays of the respective segments.

7. The method according to claim 1, wherein the parameters are statistical parameters over a period of time, and the parameters comprise one or more of:

network deployment characteristic parameter;
traffic characteristic parameter of a user;
system parameter configuration characteristic parameter; and
distribution characteristic parameter of a user equipment.

8. The method according to claim 1, further comprising:

obtaining packet delay related information of a preceding segment;
determining an actual target packet delay of a segment based on the packet delay related information and the target packet delay of the segment.

9. The method according to claim 8, wherein the packet delay related information is embedded in a packet transmitted over the preceding segment.

10. The method according to claim 8, wherein the packet delay related information comprises one or more of:

an actual packet delay of the preceding segment;
an actual packet delay and a target packet delay of the preceding segment;
a difference between the actual packet delay and the target packet delay of the preceding segment; and
automatic retransmission request configuration parameters.

11. A method for adjusting a target packet delay of a segment of a link, comprising:

obtaining packet delay related information of a preceding segment to the segment;
determining an actual target packet delay of the segment based on the packet delay related information and the target packet delay of the segment.

12. The method according to claim 11, further comprising:

sending packet delay related information regarding the segment to a following network node, for using in determining an actual target packet delay of a following segment.

13. An apparatus for determining target packet delays of respective segments of a link, comprising modules configured to perform the method according to any one of claims 1 to 10.

14. An apparatus for adjusting a target packet delay of a segment of a link, comprising:

an information obtainment module configured to obtain packet delay related information of a preceding segment to the segment;
an actual target determination module configured to determine an actual target packet delay of the segment based on the packet delay related information and the target packet delay of the segment.

15. The apparatus according to claim 14, further comprising:

an information sending module configured to send the packet delay related information regarding the segment to a following network node for using in determining an actual target packet delay of a following segment.

**16.** A network node comprising the apparatus according to claim 13.

**17.** A network node comprising the apparatus according to claim 14 or 15.

$t_{sum}=t_1+t_2$ ,$t_1$ satisfying $P_1$□ $t_2$ satisfying $P_2$

eNB      $t_1$      RN      $t_2$      UE

## Fig.1a

$t_1$

$t_1-\Delta t$

$t_2$

$t_2+\Delta t$

## Fig.1b

$t_1$

$t_1+\Delta t$

$t_2$

$t_2-\Delta t$

## Fig. 1c

Start

S201

Obtain parameters affecting packet delayd

S202

Determine target packet delays of the respective segments
according to a relation between the packet delays of the respective
segments and an overall packet delay of a link based on the
parameters and an overall requirement on the packet delay of the link

S203

Trigger a re-determination of the target packet delays
of respective segments in response to that a target
packet delay of a segment is unable to be achieved

End

Fig.2

Start

Obtain packet delay related information of a preceding packet

S301

Determine an actual target packet delay of the segment
based on the packet delay related information and the
target packet delay of the segment

S302

Send packet delay related information regarding the segment
to a following network node for using in determining an
actual target packet delay of a following segment

S303

End

Fig.3

EP 2 557 837 A1

EP 2 557 837 A1

| UE | RN1 | RN2 | eNB |

Service initialization and determination of target packet delays of respective segments  — C410

Perform scheduling based on target packet delays  — C420

Transmit traffic data and packet delay related information  — C421

C423 — Determine an actual target packet delay based on the packet delay related information and the target packet delay, and perform scheduling

Calculate average packet delay and measure parameters affecting the packet delay  — C422

Transmit traffic data and packet delay related information

C424 — Calculate average packet delay and measure parameters affecting the packet delay  — C425

C426 — Determine an actual target packet delay based on the packet delay related information and the target packet delay, and perform scheduling

Transmit traffic data  — C427  — C428

Calculate average packet delay and measure parameters affecting the packet delay

Report/ exchange the calculated values and the measured parameters to determine whether to adjust the target packet delays of the respective segments  — C429

Re-determine the target packet delays of the respective segments  — C411

Fig.4

17

C510

UE                     RN1                 RN2              eNB

Service initialization and determination of target packet delays of respective segments

C520

Request and allocate sources

C521

Transmit traffic data

C522

Determine an actual target packet delay based on the obtained packet delay related information and the target packet delay, and perform a scheduling request

C523

Request and allocate sources

C524

Transmit traffic data and packet delay related information

C525

C526

Calculate average packet delay and measure parameters affecting the packet delay

Determine an actual packet delay based on the packet delay related information and the target packet delay, and perform a scheduling request

C527

Request and allocate Resources

C528

Transmit traffic data

Calculate average packet delay and measure the parameters affecting the packet delay

C529

C530

Report/exchange the computed values and the measured parameters to determine whether to adjust the target packet delays of the respective segments

C511

Re-determine the target packet delays of the respective segments

Fig.5

600

604

Re-determination triggering module

601

Parameter collection module

602

Target determination module

603

Target sending module

## Fig.6

700

704

701
Parameter collection module

702
Target determination module

Re-determination triggering module

705
Parameter obtainment module

706
Parameter sending module

Fig.7

800

Information obtainment module — 801

Actual target
determination module — 802

Information sending module — 803

Fig.8

# INTERNATIONAL SEARCH REPORT

International application No.

PCT/CN2010/071564

| A. CLASSIFICATION OF SUBJECT MATTER |
| --- |
| H04W28/00 (2009.01) i<br>According to International Patent Classification (IPC) or to both national classification and IPC |

| B. FIELDS SEARCHED |
| --- |
| Minimum documentation searched (classification system followed by classification symbols)<br><br>IPC: H04W28/-, H04B7/- |
| Documentation searched other than minimum documentation to the extent that such documents are included in the fields searched |
| Electronic data base consulted during the international search (name of data base and, where practicable, search terms used)<br><br>CPRSABS, CNKI, WPI, EPODOC: link/path, sect/section/segment/subsection/hop, packet, delay+/latency, relay/repeater, total/all, aim/goal/target |

## C. DOCUMENTS CONSIDERED TO BE RELEVANT

| Category* | Citation of document, with indication, where appropriate, of the relevant passages | Relevant to claim No. |
| --- | --- | --- |
| A | CN101166073A (NTT DOCOMO INC) 23 Apr. 2008 (23.04.2008) the whole document | 1-17 |
| A | CN1943267A (SIEMENS AG) 04 Apr. 2007 (04.04.2007) the whole document | 1-17 |
| A | US2010061264A1 (VERIZON BUSINESS NETWORK SERVICES INC) 11 Mar. 2010 (11.03.2010) the whole document | 1-17 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 Dec. 2010 (27.12.2010) | **13 Jan. 2011 (13.01.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>ZHANG, Yanqing<br><br>Telephone No. (86-10)62411428 |

Form PCT/ISA /210 (second sheet) (July 2009)

## INTERNATIONAL SEARCH REPORT
### Information on patent family members

International application No.

PCT/CN2010/071564

| Patent Documents referred in the Report | Publication Date | Patent Family | Publication Date |
|---|---|---|---|
| CN101166073A | 23.04.2008 | JP2008104184A | 01.05.2008 |
| CN1943267A | 04.04.2007 | GB2413236A | 19.10.2005 |
| | | WO2005101893A1 | 27.10.2005 |
| | | GB2413236B | 28.06.2006 |
| | | EP1736026A1 | 27.12.2006 |
| | | EP1736026B1 | 19.03.2008 |
| | | DE602005005463E | 30.04.2008 |
| | | US2008145047A1 | 19.06.2008 |
| | | DE602005005463T2 | 16.04.2009 |
| US2010061264A1 | 11.03.2010 | NONE | |

Form PCT/ISA /210 (patent family annex) (July 2009)